(19) Europäisches Patentamt
European Patent Office
Office européen des brevets

(11) **EP 4 628 210 A1**

(12) **EUROPEAN PATENT APPLICATION**
published in accordance with Art. 153(4) EPC

(43) Date of publication:
**08.10.2025 Bulletin 2025/41**

(21) Application number: **23898230.0**

(22) Date of filing: **27.11.2023**

(51) International Patent Classification (IPC):
**B01J 35/00** $^{(2024.01)}$    **B01J 37/02** $^{(2006.01)}$
**B01J 37/08** $^{(2006.01)}$    **B01J 23/75** $^{(2006.01)}$
**B01J 23/755** $^{(2006.01)}$    **C01B 3/40** $^{(2006.01)}$

(52) Cooperative Patent Classification (CPC):
**B01J 23/75; B01J 23/755; B01J 35/00;**
**B01J 37/02; B01J 37/08; C01B 3/40**

(86) International application number:
**PCT/KR2023/019208**

(87) International publication number:
**WO 2024/117704 (06.06.2024 Gazette 2024/23)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.11.2022 KR 20220163991**

(71) Applicant: **Korea Research Institute of Chemical
Technology
Daejeon 34114 (KR)**

(72) Inventors:
- **CHANG, Tae Sun**
  **Daejeon 34114 (KR)**
- **LEE, Jin Hee**
  **Daejeon 34114 (KR)**
- **HEO, Il Jeong**
  **Daejeon 34114 (KR)**
- **YOU, Young Woo**
  **Daejeon 34114 (KR)**
- **KIM, Young Jin**
  **Daejeon 34114 (KR)**

(74) Representative: **Richly & Ritschel Patentanwälte
PartG mbB
Sattlerweg 20
51429 Bergisch Gladbach (DE)**

(54) **CATALYST FOR DRY REFORMING**

(57) The present invention relates to a dry reforming catalyst and, more specifically, to a new-concept dry reforming catalyst, which produces synthesis gas in a carbon reaction system based on a reducing gas, and is newly configured using an approach that is completely opposite to a conventional approach, thereby as to significantly inhibit carbon deposition, which is the most critical challenge in conventional dry reforming technology, thereby significantly extending the life time of the catalyst.

[FIG. 6]

**Description**

[Technical Field]

The present invention relates to a dry reforming catalyst based on a reducing gas, and more specifically, to a new-concept dry reforming catalyst for a carbon reaction system based on a reducing gas, which newly forms a configuration of a dry reforming catalyst used in the carbon reaction system based on the reducing gas, thereby significantly suppressing carbon deposition and remarkably extending the life time of the catalyst.

[Background Art]

Recently, energy problems have become a major social issue, and excessive emissions of greenhouse gases, particularly carbon dioxide, have emerged as a serious environmental concern.
With growing recognition of the urgent need to develop and utilize new and renewable energy sources capable of sustainable growth to ensure energy security both domestically and internationally, various technologies are being developed not only to expand the use of such energy sources but also to capture and utilize carbon dioxide in response to environmental challenges.
South Korea is recognized as one of the world's major greenhouse gas emitters, and international pressure to reduce its emissions is mounting.
As a form of future clean energy that can simultaneously address environmental issues such as global warming and reduce dependence on fossil fuels, hydrogen energy is emerging as a key energy source, and developing technologies to recycle carbon dioxide as a circular carbon resource has become a critical research challenge.
In general, from a raw material perspective, there are two methods for producing synthesis gas, which is composed of hydrogen and carbon monoxide: one is to use fossil fuels such as natural gas, and the other is to produce synthesis gas from biomass such as sewage sludge or food waste. Among these synthesis gas production methods, it is economically advantageous to use carbon dioxide and biomass such as methane gas and to utilize renewable energy.
As a method for producing synthesis gas from such a reducing gas, methods such as dry reforming, wet reforming, or combined reforming, which are summarized in the following reaction formulas, are known in the art.

Dry reforming: $CO_2 + CH_4 \rightarrow 2CO + 2H_2O$ ($\Delta H$=261 kJ/mol)
Steam reforming: $H_2O + CH_4 \rightarrow 3H_2 + CO$ ($\Delta H$=226 kJ/mol)
Combined reforming: $CO_2 + 3CH_4 + 2H_2O \rightarrow 4CO + 8H_2$ ($\Delta H$=712 kJ/mol)

Among the reforming reactions using the above-described reducing gases, dry reforming is a synthesis gas production technology that can use the largest amount of $CO_2$ (a greenhouse gas) as a raw material among catalytic reforming technologies, and has a high greenhouse gas reduction effect, thus attracting global interest in securing the technology.
In particular, since the dry reforming reaction produces a higher proportion of CO than other reforming reactions, which is preferable for the production of chemical products, securing high-performance reaction technology is expected to have a significant impact on greenhouse gas reduction.
However, this dry reforming reaction uses a catalyst to perform the reaction, and dry reforming of methane (DRM) technology, although capable of reducing greenhouse gases, has a serious drawback in that it is difficult to commercialize due to the short life of the catalyst.
As such, although conventional dry reforming catalysts have been continuously developed for over 100 years due to their ability to use $CO_2$ as a feedstock, they still suffer from the problem of severely limited life time due to catalyst surface deactivation and structural degradation.
Therefore, when using a dry reforming catalyst, there are virtually no cases where the catalyst can be used for more than 1,500 to 2,000 hours. Therefore, various studies have been proposed to extend the life time of the catalyst in dry reforming, but there is a lack of technical approaches beyond improving the catalyst composition itself.
As a conventional dry reforming catalyst, Korean Patent Registration No. 10-2194440 discloses a dry reforming catalyst that includes a metal oxide support containing a hydroxyl group on the catalyst surface and one or more active substances selected from nickel (Ni), cobalt (Co), ruthenium (Ru), palladium (Pd), iridium (Ir), platinum (Pt) and rhodium (Rh), and states that the catalyst exhibits excellent catalytic activity and long-term stability.
In addition, Korean Patent Publication No. 10-2022-0034712 discloses a dry reforming catalyst for methane, prepared through a co-precipitation method using a nickel precursor, a magnesium precursor, and an aluminum precursor. Further, Korean Patent Registration No. 10-2053978 discloses a dry reforming catalyst using a catalyst having the composition of $Sr_{1-y}Y_yTi_{1-x}Ru_xO_{3-\delta}$ (wherein, x is greater than 0 and less than 1, y is greater than 0 and less than 0.1, and $\delta$ is between 0 and 1, inclusive).

In addition, Korean Patent Registration No. 10-2958429 discloses a dry reforming catalyst in which a transition metal such as ruthenium (Ru) or iridium (Ir) is doped and substituted at the Cr site of $LaCrO_3$, which exhibits excellent resistance to carbon deposition and high catalytic activity. Further, Korean Patent Registration No. 10-1457098 discloses a homogeneous catalyst in which yttrium and ruthenium are doped into the perovskite lattice of $SrTiO_3$ to form a single phase.

However, although these existing dry reforming catalysts aim for extended service life, they have reported catalyst's life time of no more than 1,000 hours, and thus no technology has yet been proposed that ensures sufficient life time of the catalyst.

In fact, most of the existing dry reforming catalysts that have been proposed to extend the life time of the catalyst have a usage limit of only 500 to 1,000 hours, or at best, 1,000 hours. Thus, it remains an urgent issue to solve this problem, but no viable technology has been proposed globally to overcome it.

[Prior Art Document]

[Patent Document]

(Patent Document 1) Korean Patent Registration No. 10-2194440
(Patent Document 2) Korean Patent Laid-Open Publication No. 10-2022-0034712
(Patent Document 3) Korean Patent Registration No. 10-2053978
(Patent Document 4) Korean Patent Registration No. 10-2958429
(Patent Document 5) Korean Patent Registration No. 10-1457098

[Summary of Invention]

[Problems to be Solved by Invention]

The present invention aims to solve the problems of the prior art in the configuration of a dry reforming catalyst of a carbon reaction system that reforms carbon dioxide and the like, and to provide a dry reforming catalyst that can significantly extend the life time of the catalyst.

Therefore, an object of the present invention is to provide a catalyst with excellent physical properties that can be applied to dry reforming reactions in a carbon reaction system using a reducing gas.

In addition, another object of the present invention is to provide a new-concept dry reforming catalyst that almost minimizes carbon deposition and thereby significantly extends its life time.

Further, another object of the present invention is to provide a method for manufacturing a new-concept dry reforming catalyst with an extended and semi-permanent life time.

In addition to the above-described objects, the present invention may include various technical effects and outcomes derived from the actions and advantages of the composition of the present invention, even if not explicitly stated herein.

[Means for Solving Problems]

To achieve the above-described objects, according to an aspect of the present invention, there is provided a dry reforming catalyst for a reducing gas-based carbon reaction system, including a metal oxide catalyst dispersed on a support at a concentration of a catalytically active component, such that the metal oxide catalyst satisfies Equation 1 and Equation 2 below, and a value A in Equation 2 falls within a range of values that maintain a minimum value under reaction equilibrium conditions required to sustain a catalytic reaction:

$$[Equation\ 1]$$

$$r = k \cdot C$$

$$[Equation\ 2]$$

$$k = A \cdot exp(Ea/RT)$$

In Equations 1 and 2 above, r represents a reaction rate, k is the reaction rate constant, and C represents the concentration of a reactant;

A is a reaction frequency factor, Ea is an activation energy, R is the gas constant, and T is the temperature.

According to a preferred embodiment of the present invention, the metal oxide may be contained in an amount of 4% by weight ("wt%") or less relative to the support.

According to a preferred embodiment of the present invention, the dispersion of the metal oxide may include a form in which an adhesive for fixing an active component is dispersed on the support, and the metal oxide active component is fixed to and dispersed on the adhesive.

According to a preferred embodiment of the present invention, as an adhesive for fixing a catalytically active component, at least one of alumina sol, silica sol, and zirconia sol is preferably used at a low concentration, preferably 1 to 15%, and more preferably 5 to 10 wt%.

According to a preferred embodiment of the present invention, the metal oxide preferably includes at least one oxide selected from nickel, cobalt, iron, copper, vanadium, molybdenum, platinum group metals, cerium and zirconium.

In addition, the present invention provides, as another embodiment, a dry reforming catalyst for a reducing gas-based carbon reaction system, the dry reforming catalyst including a form in which an adhesive for fixing an active component is dispersed on a support, and a metal oxide active component is attached and fixed in a dispersed manner to the adhesive

In addition, the present invention provides a method for manufacturing a dry reforming catalyst for a reducing gas-based carbon reaction system, including: coating active metal oxide particles on a surface of a support; supporting and drying the active metal oxide; and calcining and stabilizing the active metal oxide component.

[Advantageous Effects]

As described above, the dry reforming catalyst according to the present invention uses a significantly smaller amount of metal oxide than conventional catalysts, yet has the effect of being usable for tens of thousands of hours, thereby being virtually usable semi-permanently.

The present invention applies a differentiated approach that is completely opposite to the conventional catalyst manufacturing method of supporting an excessive amount of catalyst to improve catalyst performance. Therefore, it realizes an entirely different inventive concept, achieving both material savings and a remarkable extension of life time.

[Brief Description of Drawings]

FIG. 1 is a graph showing characteristics of the reaction equilibrium of a catalytic reaction process and the tendency of carbon deposition in the dry reforming reaction of a reducing gas-based carbon reaction system.

FIG. 2 is a diagram illustrating the chemical reaction concept that shows the occurrence of carbon deposition due to a reaction mechanism of the dry reforming reaction of the reducing gas-based carbon reaction system, and an effective application concept for the use of a dry reforming catalyst.

FIG. 3 is a cross-sectional view illustrating a simple comparison between a conventional catalyst structure in which a catalytically active component is directly attached to a support (Structure A), and a novel catalyst structure according to the present invention in which an adhesive is first attached to a support and then the catalytically active component is attached and fixed in a dispersed manner to the adhesive (Structure B).

FIG. 4 is a graph showing the results of measuring the life time of the catalyst when conducting a dry reforming reaction using carbon dioxide and methane gas with a dry reforming catalyst based on a reducing gas prepared according to an embodiment of the present invention, in comparison to the use of a conventional catalyst.

FIG. 5 is a photograph comparing the state of the catalyst after performing a dry reforming reaction for 800 hours using the catalyst of the present invention and a conventional catalyst.

FIG. 6 is a graph showing the results of measuring the life time of the catalyst when a dry reforming reaction is performed using carbon dioxide and methane gas with a dry reforming catalyst based on a reducing gas prepared by a method according to another embodiment of the present invention.

[Mode for Carrying out Invention]

Hereinafter, the present invention will be described in more detail as an embodiment.

The present invention relates to a novel dry reforming catalyst that can significantly extend the life time of the catalyst by using a minimum amount of catalytically active components in forming a configuration of a dry reforming catalyst based on a reducing gas.

In the present invention, the term "reducing gas" is defined as a reducing agent used in a carbon reaction system, such as reducing $CO_2$ to produce synthesis gas, and mostly refers to a gaseous substance. This reducing gas includes hydrocarbons such as methane, ethane, and propane, or a mixture thereof, or a compound in which these components are mixed. Examples of the reducing gas may include a mixture of $CH_4$, $CO_2$, $H_2$, $O_2$, and $N_2$, etc. Additionally, the reducing gas may typically include gases containing carbon, industrial by-product gases generated from industrial activities, carbon mixed gases, greenhouse gases such as methane or carbon dioxide, unreacted products, by-products, and volatile organic compounds generated by factories.

As used herein, the term "dry reforming" refers to a pure dry reforming reaction, including reactions in which some dry reforming is applied or included, such as a combined reforming reaction using water.

Therefore, the present invention is characterized by forming a new configuration of a catalyst used in a reforming reaction such as a dry reforming reaction that produces synthesis gas based on a gas such as carbon dioxide or methane.

In the present invention, various studies have been conducted to extend the life time of a catalyst in a dry reforming reaction. As a result, it has been identified that there is a lack of technical approaches other than those that extend service life by designing the catalyst with a specific composition has been identified. Thus, a new-concept catalyst configuration is proposed.

In particular, in the present invention, it was confirmed that the deactivation of the catalyst surface and damage to the formulation in the case of a dry reforming catalyst are caused by coking, and the present invention is characterized in that it enables an extension of the life time by solving this coking problem.

In the case of existing wet reforming, the moisture used as a raw material is a stronger oxidizer than carbon dioxide, which is the raw material for dry reforming. Therefore, it can easily react with deposited carbon to suppress deposition, and accordingly, the amount of active metal in the catalyst has been excessively added, such as 5 wt% or more, or 10 wt% or more. The reason is that, in general, when the amount of active metal in the catalyst increases, the number of active sites for the reaction also increases, allowing the catalyst to come into contact with the reactants more quickly and effectively, thereby increasing the conversion rate. For this reason, in conventional processes, catalysts containing an excess amount of metal have been produced. Therefore, the dry reforming catalysts developed so far have used the same concept as in wet reforming, where an excessive amount of active metal is used. Only the characteristics of the metal, promoter, and support have been utilized to improve the catalyst, making it difficult to solve the problem of carbon deposition.

Breaking from this conventional approach, the present invention starts from the premise that in order to reduce carbon deposition, it is necessary to suppress the formation of solid carbon generated during the dry reforming reaction process. As a result of studying the characteristics of the reaction process, the inventors have surprisingly found that it is necessary to control the reaction frequency factor in the dry reforming reaction using a catalyst.

According to a preferred embodiment of the present invention, it has been confirmed that the probability of carbon deposition can be reduced by using only enough catalytically active components to reach reaction equilibrium and not using them in excess, according to the relationship consisting of Equation 1 and Equation 2. This is a completely new conclusion that is the exact opposite of the conventional idea that catalyst development requires using a large amount of catalyst to enhance only the performance of the reforming reaction.

Therefore, according to a preferred embodiment of the present invention, in order to realize the concept of the present invention, it is necessary to approach catalyst development in a completely opposite manner compared to the conventional catalyst configuration methods proposed for dry reforming reactions.

In this way, according to the present invention, when a catalyst is used in a dry reforming reaction using a reducing gas, carbon deposition occurs on the catalyst surface due to coking. This results in deactivation and damage to the catalyst, rapidly shortening the life time of the catalyst, and this problem has been solved.

According to the present invention, when a reforming reaction is carried out using a dry reforming catalyst for a reducing gas-based carbon reaction system, it can be confirmed from the following reaction equations that the carbon generated is deposited on the surface of the catalyst and also removed:

[Scheme]   $CH_4$ decomposition: $CH_4 \leftrightarrow C(s) + 2H_2$   CO dissociation: $2CO \leftrightarrow C(s) + CO_2$   $CO_2$ gasification: $C + CO_2 \leftrightarrow 2CO$

Therefore, based on the fact that the life time of the catalyst can be extended by solving the carbon deposition issue of dry reforming catalysts, the present invention has been completed.

According to a preferred embodiment of the present invention, the dry reforming catalyst reaches reaction equilibrium, but due to the newly configured catalyst structure, the physicochemical properties of the catalyst are changed, resulting in almost no carbon deposition during the forward reaction. Thus, the life time of the catalyst can be significantly extended, allowing it to be used almost semi-permanently.

According to a preferred embodiment of the present invention, the reforming reaction using the dry reforming catalyst shows high equilibrium at, for example, 1 bar. Therefore, when differential pressure occurs, it acts unfavorably on the reaction and carbon deposition.

According to the present invention, the rate of carbon deposition on the catalyst in a dry reforming reaction may accelerate as the temperature decreases, and thus maintaining the temperature becomes an important factor. In addition, since the rate of carbon deposition increases with pressure even at the same temperature, it was found that preventing the occurrence of differential pressure is also necessary.

According to a preferred embodiment of the present invention, the catalytic reaction for dry reforming is determined by the equilibrium between the forward and reverse reactions. Therefore, in order to efficiently drive the catalytic reaction, each of the forward and reverse reactions needs to be analyzed. For example, the main reaction that generates carbon (C) is CO dissociation, which occurs at low temperatures. It was discovered that a temperature drop during this endothermic reaction may be a major cause of carbon deposition.

Therefore, in dry reforming reactions using a reducing gas and a conventional catalyst, deposition occurs on the catalyst. In order to suppress this carbon deposition, it is necessary to suppress CO dissociation. That is, the inventors discovered the new fact that optimal control of the forward reaction, in which carbon deposition occurs, is required while maintaining reaction equilibrium.

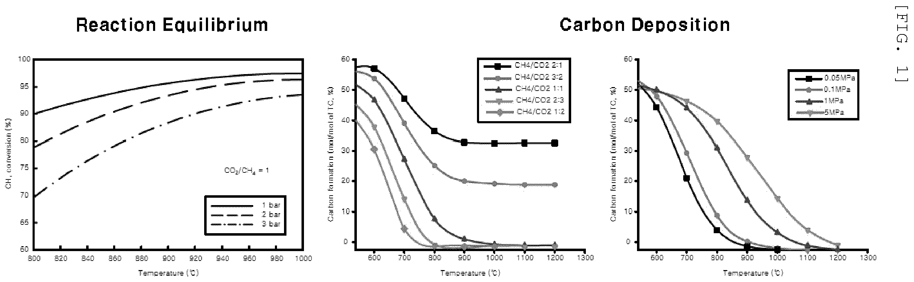

In this regard, the graph in FIG. 1 shows the characteristics of reaction equilibrium and the tendency of carbon deposition, confirming the serious issue of shortened catalyst life in dry reforming catalytic reactions.

The present invention proposes a new catalyst application concept by closely analyzing the mechanism of conventional dry reforming catalytic reactions, and this discovery is an important feature of the invention.

In addition, according to a preferred embodiment of the present invention, since the temperature and reactant feed concentration remain constant during dry reforming, if these are considered constants, the pre-exponential factor becomes a variable. This factor relates to the collision frequency of the reactants, and the inventors have found that by adjusting the number of catalytically active components, the reaction rate can be controlled. By maintaining the reaction equilibrium while minimizing the forward reaction rate, carbon deposition can be suppressed.

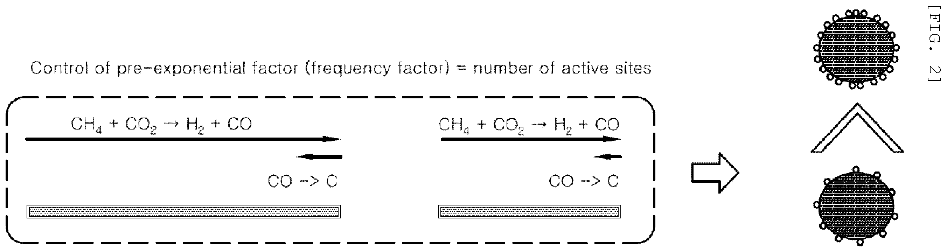

According to a preferred embodiment of the present invention, the technical features of the present invention are schematically illustrated as a chemical reaction concept in FIG. 2.

The accompanying drawing, FIG. 2, is a schematic diagram illustrating the chemical reaction concept showing the occurrence of carbon deposition caused by the reaction mechanism of dry reforming based on a reducing gas, and an effective application concept of using a catalyst for dry reforming.

Therefore, based on this factual consideration, the following relationships of Equations 1 and 2 can be established to prevent carbon deposition by understanding the correlation between process conditions, temperature, constants and variables, and reaction rate control in dry reforming reactions.

$$[\text{Equation 1}]$$

$$r = k \cdot C$$

$$[\text{Equation 2}]$$

$$k = A \cdot \exp(Ea/RT)$$

In the Equations 1 and 2, each element r, k, C, A, Ea, R and T is as defined above.

In particular, the present invention is characterized in that the metal oxide catalyst is dispersed on a support at a concentration of a catalytically active component, such that the metal oxide catalyst satisfies Equation 1 and Equation 2 above, and a value of A in Equation 2 falls within a range of values that maintain a minimum value under the reaction equilibrium conditions required to sustain a catalytic reaction.

According to a preferred embodiment of the present invention, in relation to the extension of the life time of the catalyst, it is preferable to maintain the value of the rate constant according to the temperature in the relationships of Equations 1 and 2 above only at the equilibrium reaction level. To this end, it is preferable to control the number of active components in the catalyst in order to control A, which is a reaction frequency factor adjustable within the equilibrium constant.

According to a preferred embodiment of the present invention, in order to control the number of catalytically active components in the catalyst, only a minimum amount of active components should be supported. To this end, it was concluded that the metal oxide used as the catalytically active component for the dry reforming reaction should be contained in an amount of 4 wt% or less, and more preferably 3 wt% or less, relative to the support.

According to a preferred embodiment of the present invention, when the conditions of Equations 1 and 2 are satisfied, the metal oxide serving as the active component attached to the support forming the catalyst may be contained in an amount of 4 wt% or less, preferably 3 wt% or less, and more preferably 2 wt% or less, per unit mass of the support. For example, it may be supported in an amount of 0.1 to 3 wt%, more preferably 0.5 to 3 wt%, and most preferably 0.5 to 2 wt%.

According to a preferred embodiment of the present invention, as the metal compound, at least one of nickel, cobalt, iron, copper, vanadium, molybdenum, platinum group metals, cerium, and zirconium is preferably used.

According to a preferred embodiment of the present invention, the catalyst that can be used in the dry reforming catalytic reaction may be configured to have a form with a very low specific surface area and low pressure drop, for example, by using an ionized catalytically active component precursor solution.

According to a preferred embodiment of the present invention, the catalyst used in the dry reforming catalytic reaction preferably supports the active component on a support that exhibits high heat resistance even at high temperatures.

In the present invention, all such types are referred to as supports.

According to a preferred embodiment of the present invention, a porous support or a support with a high specific surface area may not be employed in the present invention. Even without using a porous or high specific surface area support, the catalyst loaded with a small amount of active component, as intended in the present invention, can exhibit excellent performance. In this case, ceramic or metallic materials, such as cordierite or silicon carbide, may be used as the support. Preferably, the support has a channel-type structure or low-pressure-drop packed condition that facilitates reactant flow. As a specific example, components such as Al, Zr, Si, Ti, Mg, Ce, and La may be used as the support. The support may be used in the form of oxides such as $SiO_2$, $Al_2O_3$, $MgO$, $ZrO_2$, $SeO_2$, $TiO_2$, for example.

In this way, conventionally, in order to support a large amount of catalytically active components, a support with a high specific surface area was used or a large amount of catalyst was applied in a molded form. However, the present invention is characterized by minimizing the concentration of the catalytically active component by using it in a highly limited manner.

Therefore, according to a preferred embodiment of the present invention, the dry reforming catalyst of the present invention may be attached by dispersing a small amount of active components, for example, within 4 wt% per unit mass of the support, compared to the conventional support.

According to a preferred embodiment of the present invention, such a catalyst configuration means that the amount of the catalytically active component is used in a highly limited manner, only to the extent necessary to satisfy reaction equilibrium. This implies that the catalyst may be prepared in a completely different form or with a technical philosophy that is the opposite of conventional reforming catalyst development, which typically uses supports with high specific surface area for loading large amounts of catalytically active components, or molding and applying large quantities of catalyst.

According to a preferred embodiment of the present invention, the dry reforming catalyst may be prepared through steps of: for example, cleaning the surface of the support or coating active metal oxide particles on the surface of the support; supporting and drying the active metal oxide; and calcining and stabilizing the active metal oxide component.

Meanwhile, as another example of the catalyst composition of the present invention, the configuration of the dry reforming catalyst for a reducing gas-based carbon reaction system according to the present invention may be formed by attaching an adhesive for fixing an active component to a support in order to improve the durability of the catalytically active component at high temperatures, and then attaching and fixing the active component in a dispersed manner to the adhesive

According to a preferred embodiment of the present invention, in this case, the relationships of Equations 1 and 2 may be applied, or the desired purpose may be achieved through such a catalyst composition even without applying them. However, when the conditions of Equations 1 and 2 are satisfied and an adhesive for fixing an active component is used, more excellent catalytic properties may be obtained, and the life time of the catalyst may also be extended.

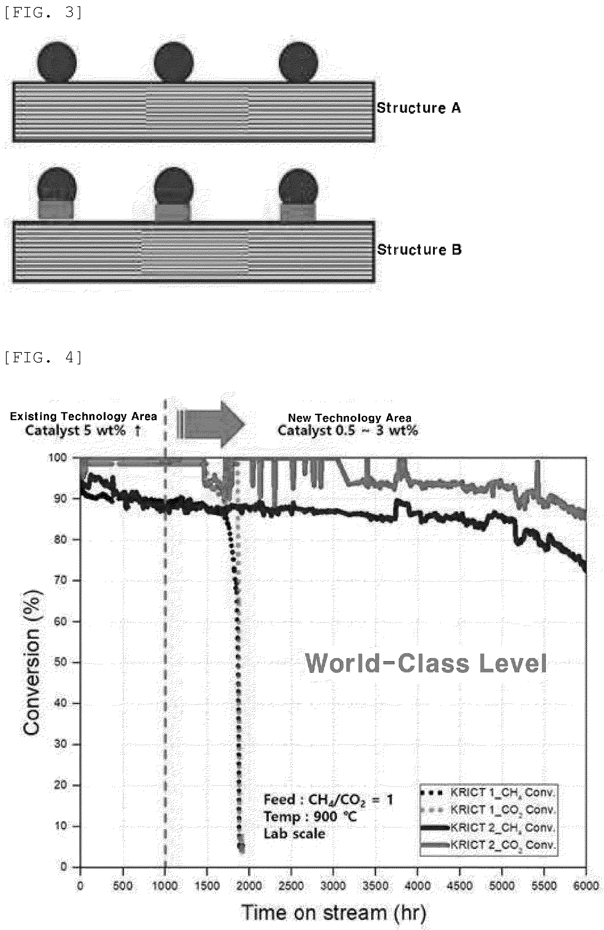

Therefore, according to a preferred embodiment of the present invention, it is preferable in the dry reforming catalyst that the catalytically active component is not directly attached to the support, but rather that the adhesive is first dispersed and fixed, and then the active component is subsequently fixed to the adhesive. This means that it may be prepared in a completely different form from the conventional method of attaching the active component directly to the support. The preferred structural form according to the present invention may be manufactured in a novel configuration, for example, as illustrated in FIG. 3.

The attached FIG. 3 is a cross-sectional view briefly illustrating a comparison between a conventional catalyst structure in which a catalytically active component is directly attached to a support (Structure A) and a novel catalyst structure according to the present invention in which an adhesive is first attached to a support and then the catalytically active component is attached and fixed in a dispersed manner to the adhesive (Structure B). The present invention can use both of these structures, and structure B may be more advantageous.

According to a preferred embodiment of the present invention, the dry reforming catalyst according to the present invention, which can be used for a long period of time, is basically configured by dispersing only a small amount of the active component sufficient to reach reaction equilibrium, preferably within 4 wt% per unit mass of the support, and more preferably 0.1 to 3 wt%. Through this, long-term of catalyst operation is possible, although the performance of the catalyst may gradually deteriorate after several thousand hours. However, even in such a case, it may exhibit significantly improved performance compared to the conventional catalysts.

According to a preferred embodiment of the present invention, in order to prevent performance degradation of the catalyst due to long-term use, stabilization of the catalytically active component is necessary.

According to the present invention, in order to stabilize the catalytically active component, stabilization may be achieved by first attaching an adhesive and then strongly fixing the active component thereon, rather than directly fixing the catalytically active component to the support. In this case, deterioration in catalytic activity may be prevented even during long-term use of the catalyst.

According to a preferred embodiment of the present invention, at least one of low-concentration alumina sol, silica sol, and zirconia sol may be used as the adhesive for fixing an active component, and the adhesive is dispersed on the surface of the support for fixing the active component. For example, the adhesive may be used at a ratio of 10 wt% per unit area of the support, preferably 5 wt% or less, and for example, may be used in a range of 5 to 10 wt%.

According to a preferred embodiment of the present invention, the production of a catalyst in which the active component is fixed to the adhesive as described above may include the steps of: cleaning the surface of the support or coating active metal oxide particles on the surface of the support; supporting and drying the active metal oxide; and calcining and stabilizing the active metal oxide component. However, in this case, it is necessary to disperse the active metal oxide component at a concentration of the catalytically active component, such that the metal oxide catalyst satisfies Equation 1 and Equation 2 above, and a value A in Equation 2 falls within a range of values that maintain a minimum value under the reaction equilibrium conditions required to sustain a catalytic reaction. For example, the catalyst may be prepared by a method including the steps of cleaning the surface of the support, supporting alumina sol on the support, drying and calcining it, then supporting the active component precursor, and subsequently drying and calcining it.

As described above, according to the present invention, unlike the conventional ones, the catalytically active component used in a dry reforming catalyst for a reducing gas-based carbon reaction system is used in a significantly smaller amount than the conventional ones, and thus the life time of the catalyst may be extended by at least several dozen times.

For example, the dry reforming catalyst of the present invention may be used for at least 1,500 hours or more, or 2,000 hours or more, 3,000 hours or more, or 5,000 hours or more, based on a conversion rate of 50% to 60% or more, preferably 70% or more, and typically may be used for 10,000 hours or more, preferably 20,000 hours or more.

Since the catalyst of the present invention has maintained its catalytic activity well since its development, it can be considered that it may be used virtually semi-permanently.

Therefore, the present invention is economical by using a small amount of the active component and enables long-term replacement cycles of the catalyst, thereby simplifying process operation.

Hereinafter, the results of comparative experiments on catalysts are presented to prove the effect of the present invention. The following examples are provided for illustrative purposes, and the present invention is not limited to or interpreted based on the following examples.

[Example 1]

The weight of the catalytically active component (active component: Co, Ni) that determines the A factor in the relationships of Equations 1 and 2 presented in the present invention was adjusted to 0.5 to 3 wt% (1.5 wt%), and a dry reforming reaction was performed with the prepared dry reforming catalyst based on a reducing gas using carbon dioxide and methane gas at a reaction temperature of 900°C, a raw material $CO_2/CH_4$ ratio of 1, and a space velocity of 4,200 h$^{-1}$. While maintaining these conditions and continuously performing the dry reforming reaction, the life time of the catalyst (i.e., the usable duration) was measured.

The results are shown in FIG. 4.

FIG. 4 is a graph showing the results of measuring the life time of the catalyst when conducting a dry reforming reaction using carbon dioxide and methane gas with a catalyst for a reducing gas-based carbon reaction system prepared according to an embodiment of the present invention, in comparison to the use of a conventional catalyst.

As a result of this experiment, it was confirmed that the life time of the catalyst was at least 1,500 hours or more, preferably 2,000 hours or more, and 10,000 hours or more, indicating that it could be used for a significantly longer period of about 2 to 4 times longer than the conventional lifespan of 500 to 1,000 hours.

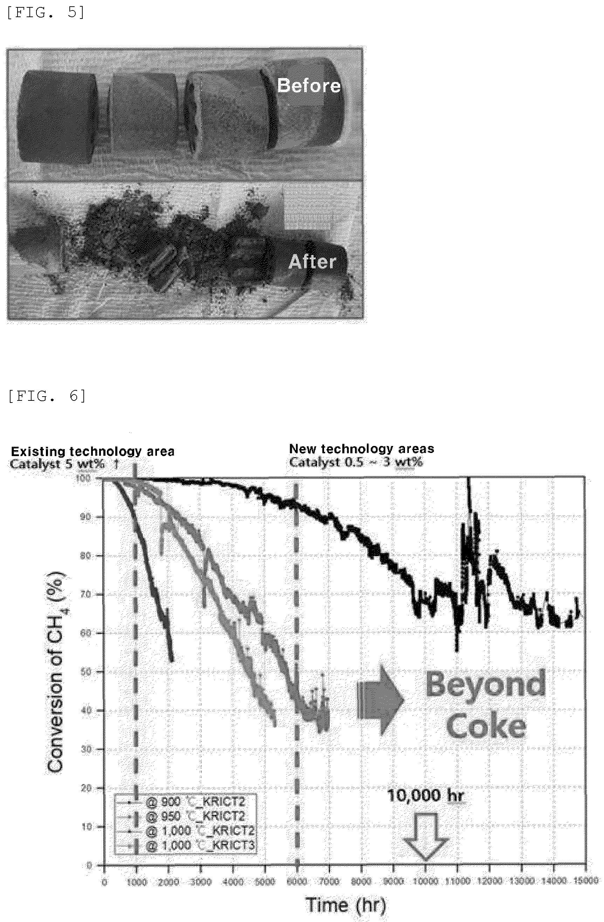

In addition, a dry reforming reaction was conducted for 800 hours using both the catalyst of the present invention and a conventional catalyst, and the physical state of each catalyst after use was observed. The results are described in comparison in FIG. 5.

As shown in FIG. 5, the conventional catalyst was damaged and became unusable, whereas the catalyst of the present invention maintained its structure and demonstrated viability for long-term use.

[Example 2]

A dry reforming catalyst was prepared by adjusting the weight of the catalytically active component (active component: Co, Ni) to 0.5 to 3 wt% (specifically, 2 wt%) on a support ($SiO_2$) to which a small amount (2 wt% or less) of a fixing agent (alumina sol) was attached. The continuous dry reforming reaction was performed under the same conditions as in Example 1 using carbon dioxide and methane gas, and the life time of the catalyst was measured.

The results are shown in FIG. 6.

According to the experimental results of FIG. 6, the durability of the catalyst used was confirmed to be at least 10,000 hours or more, which is 10 to 20 times longer than the maximum lifespan of the conventional catalysts.

From the results of the above examples, it was experimentally confirmed that the new dry reforming catalyst of the present invention may be used for an extraordinarily long period of time, almost semi-permanently, even though it uses an amount of active component that is surprisingly low and previously deemed insufficient. This extension of catalyst life time enables a significant technological advancement in terms of economic benefit and process simplification compared to the use of conventional catalysts.

In addition, it is expected that the development of this long-life catalyst according to the present invention will make an innovative contribution to addressing the problem of carbon neutrality.

**Claims**

1. A dry reforming catalyst for a reducing gas-based carbon reaction system, comprising a metal oxide catalyst dispersed on a support at a concentration of a catalytically active component, such that the metal oxide catalyst satisfies Equation 1 and Equation 2 below, and a value A in Equation 2 falls within a range of values that maintain a minimum value under reaction equilibrium conditions required to sustain a catalytic reaction:

$$[\text{Equation 1}]$$

$$r = k \cdot C$$

$$[\text{Equation 2}]$$

$$k = A \cdot \exp(Ea/RT)$$

   In Equations 1 and 2 above, r represents a reaction rate, k is the reaction rate constant, and C represents the concentration of a reactant,
   A is a reaction frequency factor, Ea is an activation energy, R is the gas constant, and T is the temperature.

2. The dry reforming catalyst according to claim 1, wherein the dispersion of the metal oxide includes a form in which an adhesive for fixing an active component is dispersed on the support, and the metal oxide active component is fixed to and dispersed on the adhesive.

3. The dry reforming catalyst according to claim 1, wherein the metal oxide active component is dispersed and fixed to the support, wherein an adhesive for fixing an active component is dispersed on the support, and the metal oxide active component is fixed to and dispersed on the adhesive.

4. The dry reforming catalyst according to claim 1, wherein the metal oxide is contained in an amount of 4 wt% or less relative to the support.

5. The dry reforming catalyst according to claim 1, wherein the metal oxide contains at least one oxide selected from nickel, cobalt, iron, copper, vanadium, molybdenum, platinum group metals, cerium and zirconium.

6. The dry reforming catalyst according to claim 3, wherein the adhesive for fixing an active component contains at least one of alumina sol, silica sol and zirconia sol.

7. The dry reforming catalyst according to claim 1, wherein the catalyst has a life time of 1,500 hours or more based on the duration of a reforming reaction using the catalyst.

8. The dry reforming catalyst according to claim 1, wherein the catalyst has the life time of 2,000 hours or more based on the duration of a reforming reaction using the catalyst.

9. A method for manufacturing a dry reforming catalyst, comprising: coating active metal oxide particles on a surface of a support; supporting and drying the active metal oxide; and calcining and stabilizing the active metal oxide component, and
further comprising dispersing the active metal oxide particles on the support at a concentration of a catalytically active component in a reducing gas-based carbon reaction system, such that the metal oxide catalyst satisfies Equation 1 and Equation 2 below, and a value A in Equation 2 falls within a range of values that maintain a minimum value under reaction equilibrium conditions required to sustain a catalytic reaction:

[Equation 1]

$$r = k \cdot C$$

[Equation 2]

$$k = A \cdot \exp(Ea/RT)$$

In Equations 1 and 2 above, r represents a reaction rate, k is the reaction rate constant, and C represents the concentration of a reactant,
A is a reaction frequency factor, Ea is an activation energy, R is the gas constant, and T is the temperature.

[FIG. 1]

[FIG. 2]

Control of pre-exponential factor (frequency factor) = number of active sites

$CH_4 + CO_2 \rightarrow H_2 + CO$

$CO \rightarrow C$

$CH_4 + CO_2 \rightarrow H_2 + CO$

$CO \rightarrow C$

[FIG. 3]

Structure A

Structure B

[FIG. 4]

[FIG. 5]

[FIG. 6]

## INTERNATIONAL SEARCH REPORT

| International application No. |
|---|
| **PCT/KR2023/019208** |

| A. | CLASSIFICATION OF SUBJECT MATTER |
|---|---|

**B01J 35/00**(2006.01)i; **B01J 37/02**(2006.01)i; **B01J 37/08**(2006.01)i; **B01J 23/75**(2006.01)i; **B01J 23/755**(2006.01)i; **C01B 3/40**(2006.01)i

According to International Patent Classification (IPC) or to both national classification and IPC

| B. | FIELDS SEARCHED |
|---|---|

Minimum documentation searched (classification system followed by classification symbols)

B01J 35/00(2006.01); B01J 23/62(2006.01); B01J 23/755(2006.01); B01J 23/80(2006.01); B01J 23/89(2006.01); B01J 31/28(2006.01); B01J 31/38(2006.01); B01J 37/02(2006.01); C01B 32/40(2017.01); C07C 5/333(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 이산화탄소(carbon dioxide), 메탄(methane), 촉매(catalyst), 입자 (particle), 금속 산화물(metal oxide), 니켈(nickel), 코발트(cobalt), 수명(lifetime), 코팅(coating), 반응속도(reaction rate), 졸 (sol), 분산(dispersion), 건조 개질(dry reforming)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 2012-187560 A (NISSAN MOTOR CO., LTD. et al.) 04 October 2012 (2012-10-04)<br>See paragraphs [0004]-[0008], [0011]-[0013], [0016]-[0027] and [0032]-[0039]. | 1-9 |
| A | KR 10-2022-0014120 A (HYUNDAI MOTOR COMPANY et al.) 04 February 2022 (2022-02-04)<br>See paragraphs [0048]-[0073]; and claim 1. | 1-9 |
| A | KR 10-2018-0012558 A (KOREA RESEARCH INSTITUTE OF CHEMICAL TECHNOLOGY) 06 February 2018 (2018-02-06)<br>See claims 1-10. | 1-9 |
| A | KR 10-2015-0089766 A (KOREA RESEARCH INSTITUTE OF CHEMICAL TECHNOLOGY) 05 August 2015 (2015-08-05)<br>See claims 1-10. | 1-9 |

☑ Further documents are listed in the continuation of Box C.      ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **06 March 2024** | **06 March 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2023/019208** |

| C. | DOCUMENTS CONSIDERED TO BE RELEVANT | |
| --- | --- | --- |
| Category* | Citation of document, with indication, where appropriate, of the relevant passages | Relevant to claim No. |
| A | JP 2012-527339 A (BASF SE) 08 November 2012 (2012-11-08)<br>　　See claims 1-11. | 1-9 |

Form PCT/ISA/210 (second sheet) (July 2022)

**INTERNATIONAL SEARCH REPORT**
**Information on patent family members**

International application No.

**PCT/KR2023/019208**

| Patent document cited in search report | | | Publication date (day/month/year) | Patent family member(s) | | | Publication date (day/month/year) |
|---|---|---|---|---|---|---|---|
| JP | 2012-187560 | A | 04 October 2012 | None | | | |
| KR | 10-2022-0014120 | A | 04 February 2022 | DE | 102020130731 | A1 | 03 February 2022 |
| | | | | US | 11701647 | B2 | 18 July 2023 |
| | | | | US | 2022-0032281 | A1 | 03 February 2022 |
| KR | 10-2018-0012558 | A | 06 February 2018 | KR | 10-1828791 | B1 | 13 February 2018 |
| | | | | US | 10113119 | B2 | 30 October 2018 |
| | | | | US | 2018-0030357 | A1 | 01 February 2018 |
| KR | 10-2015-0089766 | A | 05 August 2015 | KR | 10-1558415 | B1 | 07 October 2015 |
| JP | 2012-527339 | A | 08 November 2012 | BR | PI1012861 | A2 | 27 February 2018 |
| | | | | CN | 102427878 | A | 25 April 2012 |
| | | | | EP | 2432590 | A1 | 28 March 2012 |
| | | | | JP | 5770718 | B2 | 26 August 2015 |
| | | | | KR | 10-1781656 | B1 | 10 October 2017 |
| | | | | KR | 10-2012-0047215 | A | 11 May 2012 |
| | | | | MY | 161990 | A | 31 May 2017 |
| | | | | RU | 2011151652 | A | 27 June 2013 |
| | | | | RU | 2553265 | C2 | 10 June 2015 |
| | | | | SG | 10201402458 | A | 30 July 2014 |
| | | | | SG | 175761 | A1 | 29 December 2011 |
| | | | | TW | 201105418 | A | 16 February 2011 |
| | | | | TW | I511787 | B | 11 December 2015 |
| | | | | US | 2012-0065443 | A1 | 15 March 2012 |
| | | | | US | 9091433 | B2 | 28 July 2015 |
| | | | | WO | 2010-133565 | A1 | 25 November 2010 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 102194440
- KR 1020220034712
- KR 102053978
- KR 102958429
- KR 101457098